(19) **Europäisches Patentamt / European Patent Office / Office européen des brevets**

(11) **EP 2 639 037 A1**

(12) **EUROPEAN PATENT APPLICATION**
published in accordance with Art. 153(4) EPC

(43) Date of publication:
**18.09.2013 Bulletin 2013/38**

(21) Application number: **10859428.4**

(22) Date of filing: **08.11.2010**

(51) Int Cl.:
**B29C 45/48** (2006.01)   **B29C 45/00** (2006.01)
**B64C 1/00** (2006.01)

(86) International application number:
**PCT/JP2010/069810**

(87) International publication number:
**WO 2012/063298 (18.05.2012 Gazette 2012/20)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(71) Applicant: **Mitsubishi Heavy Industries Plastic Technology Co., Ltd.**
**Nakamura-ku**
**Nagoya-shi, Aichi 453-8515 (JP)**

(72) Inventors:
• **KARIYA Toshihiko**
**Nagoya-shi**
**Aichi 453-8515 (JP)**
• **TODA Naoki**
**Nagoya-shi**
**Aichi 453-8515 (JP)**
• **NOBUTA Munehiro**
**Nagoya-shi**
**Aichi 453-8515 (JP)**

(74) Representative: **Intès, Didier Gérard André et al**
**Cabinet Beau de Loménie**
**158, rue de l'Université**
**75340 Paris Cedex 07 (FR)**

(54) **RESIN MOLDED PRODUCT FOR VEHICLE STRUCTURAL MEMBER OR AIRCRAFT STRUCTURAL MEMBER**

(57) A molded resin product for a vehicle structural member or an aircraft structural member according to the present invention is formed by injection-molding of thermoplastic resin feedstock containing reinforcement fibers by using a screw provided at a leading end portion thereof with a mixer protruding in a radial direction. In the injection-molded product, the reinforcement fiber content ratio is greater than or equal to 20% by weight and the weight-average fiber length of the reinforcement fibers in an evaluation target area having a certain size is greater than or equal to l mm and less than or equal to 3 mm.

FIG. 1

EP 2 639 037 A1

**Description**

Technical Field

The present invention relates to a molded resin product for a vehicle structural member or an aircraft structural member, which is formed by injection-molding of thermoplastic resin feedstock containing reinforcement fibers.

Background Art

In a molded resin product which is used for a vehicle structural member or an aircraft structural member, high mechanical strength is required. Therefore, in order to improve the mechanical characteristics of the molded resin product, inclusion of reinforcement fibers in thermoplastic resin has been widely performed.

As a molded resin product containing reinforcement fibers, thereby having high mechanical strength, a molded resin product in which the ratio between the weight-average fiber length and the number-average fiber length of reinforcement fibers is in a range of 1.1 to 3.0 and the weight-average fiber length is in a range of 2.0 mm to 15 mm is known (refer to, for example, PTL 1).

Further, as another molded resin product containing reinforcement fibers, thereby having high mechanical strength, a molded resin product containing 2% by volume to 20% by volume of glass fibers as the reinforcement fibers and satisfying the following conditions is also known (refer to, for example, PTL 2) .

(1) The weight-average fiber length of the reinforcement fibers is in a range of 0.8 mm to 1.8 mm.
(2) Less than or equal to 20% by weight of the entirety of the glass fibers are glass fibers having a length of greater than or equal to 2 mm.
(3) Less than or equal to 5% by weight of the entirety of the glass fibers are glass fibers having a length of greater than or equal to 3 mm.

Further, as another molded resin product containing reinforcement fibers, thereby having high mechanical strength, a molded resin product satisfying the following conditions is also known (refer to, for example, PTL 3).

(1) The reinforcement fiber content ratio is in a range of 30% by weight to 90% by weight.
(2) The weight-average fiber length of the reinforcement fibers is in a range of 1.5 mm to 10 mm.
(3) The maximum projected area of the molded resin product is greater than or equal to 20000 mm$^2$.
(4) The maximum linear expansion coefficient of the portion of the molded resin product having a wall thickness of greater than or equal to 2 mm is less than or equal to $5\times10^{-5}$ K$^{-1}$.
(5) The ratio of the maximum linear expansion coefficient/the minimum linear expansion coefficient of the portion of the molded resin product having a wall thickness of greater than or equal to 2 mm is less than or equal to 1.8.
(6) A mold cavity which is used at the time of injection molding has a narrow flow path having a cross-sectional area of less than or equal to 100 mm$^2$ and a flow path length of less than or equal to 150 mm. Alternatively, a narrow flow path is not provided in the mold cavity.

Further, as another molded resin product containing reinforcement fibers, thereby having high mechanical strength, a long fiber- reinforced polyamide resin which satisfies the following conditions and is used in a front structure of an automobile body is also known (refer to, for example, PTL 4) .

(1) The reinforcement fiber content ratio is greater than or equal to 30% by weight.
(2) The weight-average fiber length of the reinforcement fibers is in a range of 1 mm to 15 mm.
(3) The flexural modulus of a structure portion having a wall thickness of greater than or equal to 2 mm is greater than or equal to 7 GPa and the flexural strength is greater than or equal to 200 MPa.
(4) Notched Charpy impact strength is greater than or equal to 20 kJ/m$^2$.

Further, as another molded resin product containing reinforcement fibers, thereby having high mechanical strength, a molded resin product which is a molded resin product that is obtained by plasticizing and molding thermoplastic resin pellets reinforced by parallel fibers and each having a length in a range of 10 mm to 100 mm or a resin composition containing the pellets, with a low shear force, and which satisfies the following conditions is also known (refer to, for example, PTL 5) .

(1) The reinforcement fibers each having a length in a range of 5 mm to 100 mm and composed of glass fibers, carbon fibers, ceramic fibers, mineral fibers, or metal fibers are in an entangled positional relationship.

(2) 50% or more of all the reinforcement fibers accounting for 10% to 80% of the weight of a molded product forms an entanglement skeleton.

Incidentally, when generally injection- molding thermoplastic resin, as a measure for a problem of defective dispersion with a screw, a screw provided at a leading end portion thereof with a member called a mixer has been proposed. The mixer is provided with a plurality of radially protruding fins which are provided at regular intervals in a circumferential direction. Using the screw provided with the mixer, even in a case where lumps of resin having a low temperature and being insufficiently melted is present in thermoplastic resin, since the mixer breaks and agitates the lumps, dispersion of reinforcement fibers in the thermoplastic resin is promoted.

Citation List

Patent Literature

[PTL 1] Japanese Patent Application, First Publication No. H7-80834
[PTL 2] Japanese Patent Application, First Publication No. 2000-37723
[PTL 3] Japanese Patent No. 4439361
[PTL 4] Japanese Patent Application, First Publication No. 2005-324733
[PTL 5] Japanese Patent No. 3638292

Summary of Invention

Technical Problem

However, in an existing molded resin product containing reinforcement fibers, thereby having high mechanical strength, where the weight- average fiber length of the reinforcement fibers falls below I mm, a problem arises in that mechanical strength is insufficient for use as a vehicle structural member or an aircraft structural member.
On the other hand, where the weight- average fiber length of the reinforcement  fibers exceeds 3 mm, at the time of injection, thermoplastic resin lacks fluidity, and thus the width of the molding conditions becomes narrow, thereby being prone to cause unstable molding. Further, when thermoplastic resin flows in a mold, clogging with the reinforcement fibers occurs in a bent portion or the like of a flow path, and thus, so- called retention or aggregation occurs, whereby dispersibility of the reinforcement fibers in the thermoplastic resin becomes worse.
Further, in PTLs 1 to 5, in order to evaluate the degree of dispersion of the reinforcement fibers in the molded resin product, an evaluation target area having a certain size is sampled from the molded resin product. However, with respect to the size of the evaluation target area, there is neither description nor suggestion therein.
However, if the dimension of the evaluation target area is small (for example, 1.0 mm square), the reinforcement fibers having a long fiber length (for example, 3 mm or more), which are contained in a small number in the molded resin product, are not often included in the evaluation target area. As a result, there is a concern that the weight- average fiber length of the reinforcement fibers which is measured as the evaluation result may become a value biased to the short fiber length side in which the actual conditions cannot be reflected.
Further, in a case where the dimension of the evaluation target area is smaller than the fiber length of the reinforcement fibers, even if a reinforcement fiber having a length close to that of the reinforcement fibers contained in thermoplastic resin feedstock remains in the molded resin product, the reinforcement fiber is broken when sampling the evaluation target area, whereby a problem arises in that it is not possible to confirm and measure the reinforcement fibers longer than the dimensions of the evaluation target area.
The present invention has been made in view of such circumstances and has an object of providing a molded resin product which has a weight-average fiber length of reinforcement fibers in an appropriate range and which has sufficient mechanical strength for use as a vehicle structural member or an aircraft structural member. Solution to Problem
A molded resin product for a vehicle structural member or an aircraft structural member according to the invention is formed by injection-molding of thermoplastic resin feedstock containing reinforcement fibers by using a screw provided at a leading end portion thereof with a mixer protruding in a radial direction.
The molded resin product is a molded resin product for a vehicle structural member or an aircraft structural member, in which the reinforcement fiber content ratio is greater than or equal to 20% by weight and the weight-average fiber length of the reinforcement fibers in an evaluation target area having a certain size is greater than or equal to 1 mm and less than or equal to 3 mm.
In such a configuration, due to the fact that the reinforcement fiber content ratio is greater than or equal to 20% by weight and the weight-average fiber length of the reinforcement fibers in the evaluation target area is greater than or equal to 1 mm and less than or equal to 3 mm, it is possible to obtain a molded resin product having necessary and sufficient strength for use as a vehicle structural member or an aircraft structural member in place of a metallic member and having a thin thickness and being lightweight. Further, since the weight-average fiber length is greater than or equal to 1 mm and less than or equal to 3 mm, the width of the molding conditions can be widened and aggregation or defective dispersion of the reinforcement fibers can also be prevented.

Further, in the molded resin product for a vehicle structural member or an aircraft structural member according to the invention, the length of the reinforcement fibers may be greater than or equal to 2 mm and less than or equal to 20 mm.

In such a configuration, the reinforcement fibers can be supplied as a pellet-shaped strand instead of a string-shaped roving. In this way, since transportability of the reinforcement fibers is good, it is possible to improve injection molding workability.

Further, in the molded resin product for a vehicle structural member or an aircraft structural member according to the invention, the evaluation target area may be an approximate square in a plan view and the length of one side thereof may be greater than or equal to 20 mm.

In such a configuration, even the reinforcement fibers having a long fiber length, which are contained in a small number in the entirety of the molded resin product, can be sufficiently included in the evaluation target area. Therefore, it is possible to measure an accurate weight-average fiber length which reflects the actual conditions therein, as the evaluation result of the molded resin product.

Further, in the molded resin product for a vehicle structural member or an aircraft structural member according to the invention, the thermoplastic resin injected from the screw may be filled into a mold having temperature adjusted to a temperature lower than or equal to the thermal deformation temperature of the thermoplastic resin in advance, and may then be cooled and solidified.

In such a configuration, the thermoplastic resin containing the reinforcement fibers having a length of greater than or equal to 2 mm and less than or equal to 20 mm is plasticized and kneaded to the extent that the weight-average fiber length of the reinforcement fibers becomes greater than or equal to 1 mm and less than or equal to 3 mm, whereby dispersion of the fibers is improved and disaggregation of a fiber bundle is also promoted. Therefore, even if the temperature of the mold is lower than the thermal deformation temperature of the thermoplastic resin, exposure of the reinforcement fibers on the surface of the molded resin product can be prevented.

Further, in the molded resin product for a vehicle structural member or an aircraft structural member according to the invention, the thermoplastic resin may be cooled and solidified by stopping heating of the mold and starting cooling of the mold after or while the mold which is heated to a temperature higher than or equal to the thermal deformation temperature of the thermoplastic resin in advance is filled with the thermoplastic resin injected from the screw.

In such a configuration, since solidification does not start immediately when the injected thermoplastic resin has come into contact with the surface of the mold, the thermoplastic resin in a molten state covers the reinforcement fibers on the surface of the molded product, and thus exposure of the reinforcement fibers can be prevented more repeatedly and reliably.

Further, in the molded resin product for a vehicle structural member or an aircraft structural member according to the invention, matrix resin of the thermoplastic resin may be polyolefin- based resin or polyamide- based resin.

In such a configuration, even if a relatively low-cost material is used, since high strength can be obtained, it is possible to attain a reduction in costs by reducing a  material cost. Further, especially if polyamide-based resin is adopted as the matrix resin, it is possible to improve mechanical strength and heat-resistance strength at high temperature by including the reinforcement fibers.

Further, in the molded resin product for a vehicle structural member or an aircraft structural member according to the invention, the reinforcement fibers may include at least one of a glass fiber, a carbon fiber, a metal fiber, and a natural fiber.

In such a configuration, a molded resin product suitable for a vehicle structural member or an aircraft structural member which is required to have a thin thickness and lightweight properties, high mechanical strength, and recyclability is obtained. Especially, in a case where the reinforcement fiber is a carbon fiber or a metal fiber, since a reduction in weight can be attained and also conductivity can be provided to an outer covering member such as a body member, a cover for housing electrical equipment, or the like, it is possible to protect a passenger or the electrical equipment from a large current at the time of a lightning strike. Further, by adopting a natural fiber as the reinforcement fiber and combining it with, in particular, organism-derived resin such as polylactic acid, it is possible to provide a molded product with smaller burden on the global environment.

Advantageous Effects of Invention

In the invention, a molded resin product can be obtained in which the weight-average fiber length of the reinforcement fibers is in an appropriate range and which has sufficient mechanical strength and heat-resistance strength for use as a vehicle structural member or an aircraft structural member.

Brief Description of Drawings

FIG 1 is a schematic perspective view showing the external appearance of a molded resin product related to an embodiment of the invention.

FIG. 2 is a schematic diagram showing the overall configuration of an injection molding machine which is used when the molded resin product related to the embodiment of the invention is made by injection-molding.

FIG. 3 is a schematic front view showing the external appearance of a screw related to the embodiment of the invention.

FIG. 4 is an enlarged schematic perspective view of a leading end portion of a shaft related to the embodiment of the invention.

FIG. 5 is an enlarged schematic front view of the leading end portion of the shaft related to the embodiment of the invention.

FIG. 6 is a diagram showing the cross-sections of the respective portions of FIG. 5, wherein FIG. 6(a) is a diagram showing an A-A cross-section, FIG. 6(b) is a diagram showing a B-B cross-section, and FIG. 6(c) is a diagram showing a C-C cross-section.

FIG. 7 is a schematic front view showing the external appearances of screws which are used in examples of the invention, wherein FIG. 7(a) is a diagram showing a screw of Type 2, and FIG. 7(b) is a diagram showing a screw of Type 3,

Description of Embodiments

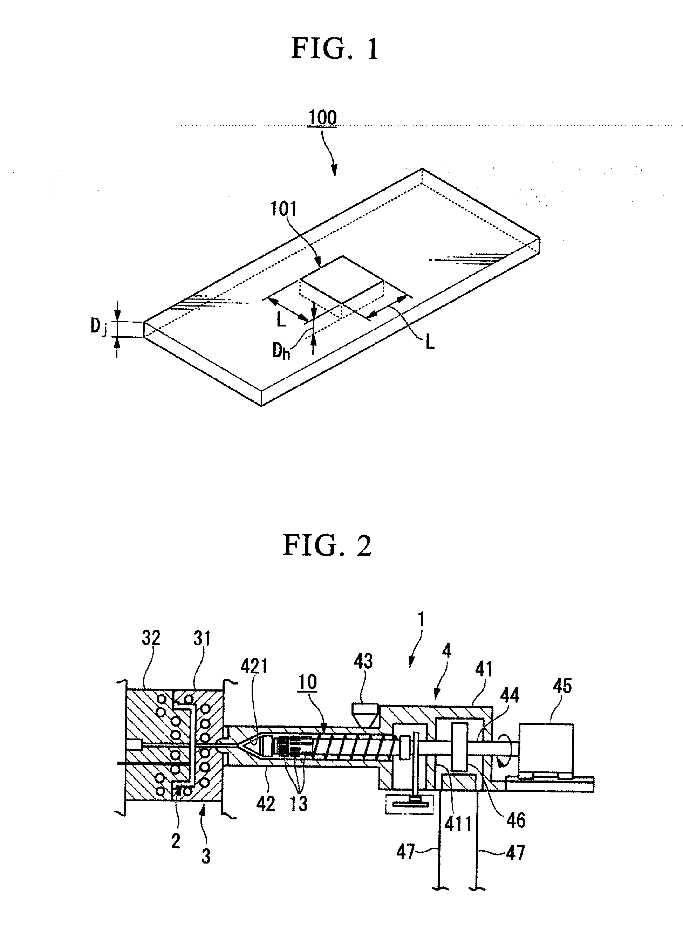

Hereinafter, an embodiment of the invention will be described with reference to the drawings. First, description will be made with regard to a molded resin product for a vehicle structural member or an aircraft structural member (hereinafter simply referred to as a "molded resin product" for brevity) related to the embodiment of the invention. FIG. 1 is a schematic perspective view showing the external appearance of a molded resin product 100 related to the embodiment.

The molded resin product 100 is composed of thermoplastic resin containing reinforcement fibers and characterized in that the weight-average fiber length of the reinforcement fibers in an evaluation target area 101 having a certain size is greater than or equal to 1 mm and less than or equal to 3 mm.

The thermoplastic resin is a resin in which softening thereof by heating and solidification thereof by cooling can be reversibly repeated, and for example, polyethylene, polypropylene, polystyrene, ABS resin, vinyl chloride resin, methyl methacrylate resin, nylon, fluorine resin, polycarbonate, polyester resin, organism-derived resin such as polylactic acid, or the like can be used. In this embodiment, polyolefin-based resin or polyamide-based resin is adopted as matrix resin, that is, a parent material of the thermoplastic resin.

The reinforcement fiber is a fiber which is mixed into the thermoplastic resin in order to reinforce the matrix resin. The reinforcement fiber content ratio in the molded  resin product 100 is set to be about 20% by weight so as to be able to secure sufficient strength for use as a vehicle structural member or an aircraft structural member. In addition, the reinforcement fiber content ratio in the molded resin product 100 can be arbitrarily changed provided that it is greater than or equal to 20% by weight.

Further, in this embodiment, the length of the reinforcement fibers is set to be greater than or equal to 2 mm and less than or equal to 20 mm. Therefore, the reinforcement fibers can be supplied as a pellet- shaped strand instead of a string- shaped roving. In this way, since transportability of the reinforcement fibers becomes good, it is possible to make workability of injection molding good.

Further, in this embodiment, as the reinforcement fibers, a glass fiber or a carbon fiber is used. In this way, it is possible to make the molded resin product 100 have properties suitable for use as a vehicle structural member or an aircraft structural member, that is, thin thickness and lightweight properties, high mechanical strength, high heat- resistance strength, and recyclability.

Further, where the glass fiber or the carbon fiber is used as the reinforcement fiber, a reduction in weight of the molded resin product 100 can be attained and also conductivity can be provided to a body member of a vehicle or an aircraft, a cover for housing electrical equipment, or the like. In this way, it is possible to protect a passenger or the electrical equipment from a large current at the time of a lightning strike to a vehicle or an aircraft.

In addition, as the reinforcement fiber, in place of the glass fiber and the carbon fiber in this embodiment, a magnesium sulfate fiber, a potassium titanate fiber, a titanium oxide fiber, a magnesium oxysulfate fiber, organic filler, an organic synthetic or natural fiber, or the like may also be used.

The evaluation target area 101 is cut away as a sample in order to examine the weight-average fiber length of the reinforcement fibers. The evaluation target area 101 is formed in an approximate square in a plan view, as shown in FIG. 1, and a length L of one side thereof is about 20 mm or more and a thickness Dh thereof is approximately equal to a thickness Dj of the molded resin product 100. Therefore, even if reinforcement fibers having a long fiber length remain in the molded resin product 100, a size capable of sufficiently accommodating the reinforcement fibers is secured in the evaluation target area 101. In this way, with respect to the molded resin product 100, an accurate weight-average fiber length which reflects the actual conditions therein can be measured.

Then, the weight- average fiber length of the reinforcement fibers in the evaluation target area 101 is made to be greater than or equal to 1 mm and less than or equal to 3 mm. In this way, as described above, in combination with the fact that the reinforcement fiber content ratio is greater than or equal to 20% by weight, the molded resin product 100 has necessary and sufficient strength for use as a vehicle structural member or an aircraft structural member. Further, since the weight- average fiber length of the reinforcement fibers is greater than or equal to 1 mm and less than or equal to 3 mm, the width of the molding conditions can be widened and aggregation or defective dispersion of the reinforcement fibers can also be prevented.

Next, the configuration of an injection molding machine 1 which is used when the molded resin product 100 related to the embodiment of the invention is made by injection- molding will be described. FIG. 2 is a schematic diagram showing the overall configuration of the injection molding machine 1.

The injection molding machine 1 includes a mold unit 3 with a cavity 2 formed in the inside, and an injection unit 4 for injecting thermoplastic resin into the cavity 2, as shown in FIG. 2.

The mold unit 3 includes a fixed mold 31 provided immovably, a movable mold 32 provided so as to be able to move with respect to the fixed mold 31, and temperature control equipment (not shown) for arbitrarily adjusting the temperature of the movable mold 32, as shown in FIG. 2. Then, the cavity 2 is formed between a concave portion of the fixed mold 31 and a convex portion of the movable mold 32 which are provided so as to face each other.

The injection unit 4 includes a unit main body 41, an injection cylinder 42, a screw 10, a hopper 43, a connecting shaft 44, a motor 45, a piston 46, and a hydraulic piping 47. A hydraulic oil cylinder 41 1 is formed in the inside of the unit main body 41. The injection cylinder 42 extends from the unit main body 41 and a leading end portion of the injection cylinder 42 is connected to the fixed mold 31. The screw 10 is accommodated in the inside of the injection cylinder 42 and the hopper 43 is provided at an upper portion of the injection cylinder 42. The connecting shaft 44 is connected to a rear end portion of the screw 10 and rotationally driven by the motor 45. The piston 46 is accommodated in the inside of the hydraulic oil cylinder 411 and fixed to the connecting shaft 44. The hydraulic piping 47 is connected to the hydraulic oil cylinder 411.

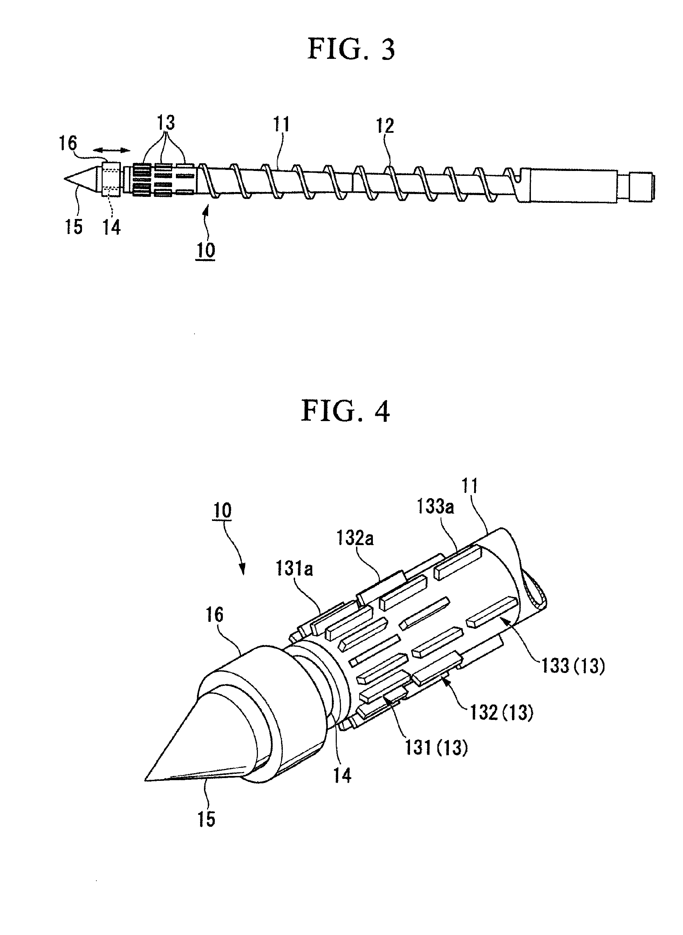

Here, FIG. 3 is a schematic front view showing the external appearance of the screw 10. The screw 10 includes a shaft 11, a flight 12, a mixer 13, a small- diameter shaft 14, a screw tip 15, and a check ring 16.

The shaft 11 has a long cylindrical shape, as shown in FIG. 3, and the small-diameter shaft 14 having a diameter smaller than the shaft 11 extends in an axial direction from a leading end portion of the shaft 11. Then, the screw tip 15 having an approximately conic shape is provided at a leading end of the small-diameter shaft 14. Further, the check ring 16 has a ring shape and the inner diameter thereof is formed to be a diameter slightly larger than the small-diameter shaft 14. The small-diameter shaft 14 is inserted into the check ring 16, whereby the check ring 16 is movable along the small-diameter shaft 14. Further, the flight 12 is provided so as to radially protrude from the shaft I 1 and spirally wind around the circumferential surface of the shaft 11, as shown in FIG. 3.

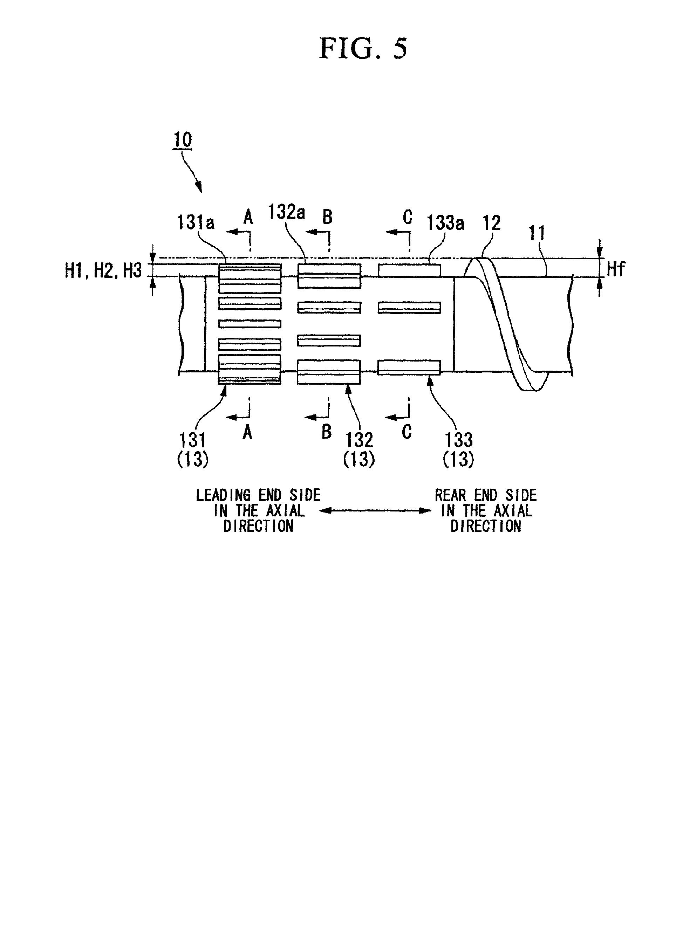

Further, FIGS. 4 and 5 are enlarged diagrams of a leading end portion of the shaft 11, wherein FIG. 4 is a schematic perspective view and FIG. 5 is a schematic front view. In addition, in FIG. 5, for convenience of explanation, illustration of the screw tip 15 is omitted.

The mixer 13 is for breaking and agitating lumps of insufficiently melted resin which is present in the thermoplastic resin passed through the flight 12. The mixer 13 is provided in an area further on the leading end side in the axial direction than the flight 12 on the circumferential surface of the shaft 11, as shown in FIG. 3. The mixer 13 is provided in three stages along the axial direction and more specifically, includes a first mixer 131 provided on the most leading end side, a second mixer 132 provided on the next leading end side, and a third mixer 133 provided on the rearmost end side.

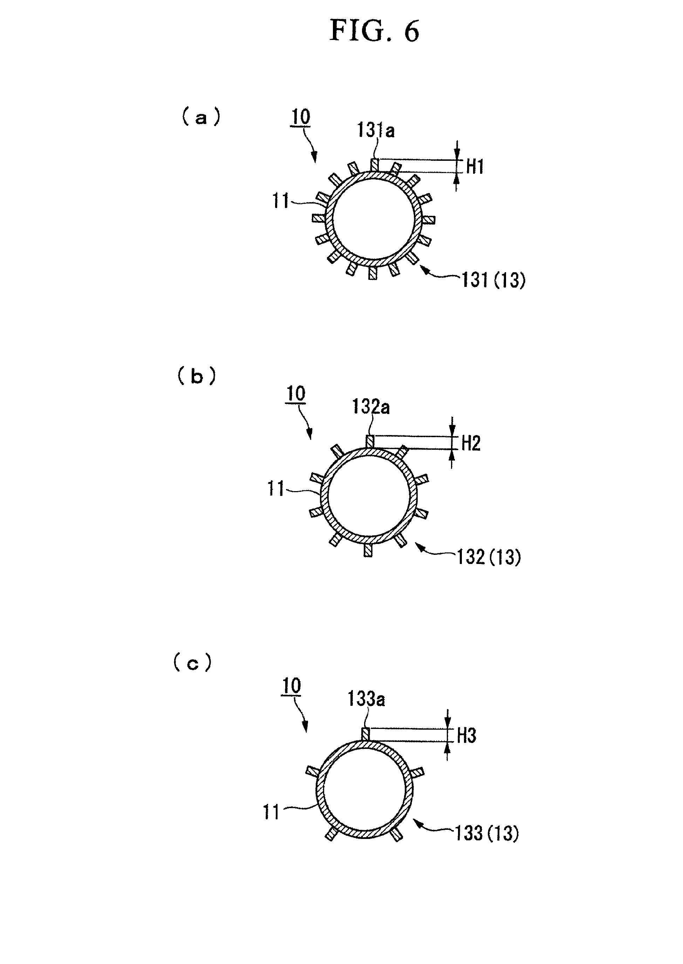

Here, FIG. 6 is a diagram showing the cross-sections of the respective portions of FIG. 5, wherein FIG. 6(a) is a diagram showing an A-A cross-section, FIG. 6(b) is a diagram showing a B-B cross-section, and FIG. 6(c) is a diagram showing a C-C cross-section. The first mixer 131 has sixteen first fins 131a radially protruding from the circumferential surface of the shaft 11 and provided at regular intervals in a circumferential direction, as shown in FIG. 6(a). Each of the first fins 131a has an approximately rectangular parallelepiped shape, as shown in FIG. 4, and is fixed to the circumferential surface of the shaft 11 such that a longitudinal direction thereof is directed in the axial direction of the shaft 11. Then, the sixteen first fins 131a are formed such that protrusion heights H 1 from the circumferential surface of the shaft 11 are the same, as shown in FIG. 6(a), and the protrusion height H1 is set lower than a protrusion height Hf of the flight 12, as shown in FIG. 5.

The second mixer 132 has ten second fins 132a provided to radially protrude from the circumferential surface of the shaft 11 and provided at regular intervals in the circumferential direction, as shown in FIG. 6(b). Each of the second fins 132a also has an approximately rectangular parallelepiped shape, as shown in FIG. 4, and is fixed to the circumferential surface of the shaft 11 such that a longitudinal direction thereof is directed in the axial direction of the shaft 11. Further, the ten second fins 132a are formed such that protrusion heights H2 from the circumferential surface of the shaft 11 I are the same, as shown in FIG. 6(b). Then, the protrusion height H2 of the second fin 132a is set to be approximately equal to the protrusion height H1 of the first fin 131a and lower than the protrusion height Hf of the flight 12, as shown in FIG. 5.

The third mixer 133 has five third fins 133a provided to radially protrude from the circumferential surface of the shaft 11 and provided at regular intervals in the circumferential direction, as shown in FIG. 6(c). Each of the third fins 133a also has an approximately rectangular parallelepiped shape, as shown in FIG. 4, and is fixed to the circumferential surface of the shaft 11 such that a longitudinal direction thereof is directed in the axial direction of the shaft 11. Further, the five third fins 133a are also formed such that protrusion heights H3 from the circumferential surface of the shaft 11 I are the same, as shown in FIG. 6(c). Then, the protrusion height H3 of the third fin 133a is set to be approximately equal to the protrusion height H1 of the first fin 131a and the protrusion height H2 of the second fin 132a and lower than the protrusion height Hf of the flight 12, as shown in FIG. 5.

In this manner, the numbers of first fins 131a to third fins 133a of the first mixer 131 to the third mixer 133 are set so as to increase toward the first mixer 131 on the leading end side in the axial direction from the third mixer 133 on the rear end side in the axial direction. More specifically, when the number of third fins 133a of the third mixer 133 which is located on the rearmost end side in the axial direction is set to be N, the number of second fins 132a of the second mixer 132 which is located on the second rearmost end side in the axial direction is set to be in a range of more than 1.5N and less than 2.5N. In this embodiment, the third fins 133a are set to be five (N=5), whereby the second fins 132a are set to be ten that is in a range of more than 7.5 (=1.5N) and less than 12.5(=2.5N).

Further, the number of first fins 131a of the first mixer 131 which is located further to the leading end side in the axial direction than the second mixer 132 is set more than 3N. In this embodiment, the number of the third fins 133a is set to be five (N=5), whereby the number of the first fins 131a is set to be sixteen that is more than fifteen (=3N) .

Further, as shown in FIG. 4, a radial distance from a valley portion of the first fin 131a to a leading end portion in the radial direction of the flight 12, that is, the protrusion height Hf of the flight 12 in this embodiment is made to have a magnitude greater than or equal to twice the outer diameter of thermoplastic resin feedstock which will be described later. Similarly, a radial distance from a valley portion of the second fin 132a to the leading end portion in the radial direction of the flight 12 and a radial distance from a valley portion of the third fin 133a to the leading end portion in the radial direction of the flight 12 are also made to be approximately equal to the protrusion height Hf of the flight 12 in this embodiment and have a magnitude greater than or equal to twice the outer diameter of thermoplastic resin feedstock which will be described later.

Next, description will be made with regard to a procedure to make the molded resin product 100 by injection-molding with the injection molding machine I related to the embodiment of the invention and the operation and effects thereof. First, the hopper 43 constituting the injection unit 4 shown in FIG. 2 is filled with solid thermoplastic resin feedstock (not shown) which contains reinforcement fibers as described above, at 20% by weight. In this state, when the motor 45 starts the driving of the connecting shaft 44, the screw 10 connected to the connecting shaft 44 starts to rotate. Then, when the thermoplastic resin feedstock is supplied from the hopper 43 to the injection cylinder 42, the thermoplastic resin feedstock is transported to the leading end side in the axial direction while being melted and plasticized by the flight 12.

Then, the thermoplastic resin which has passed through the flight 12 and entered a molten state is further transported to the leading end side in the axial direction and reaches the third mixer 133. Here, as described above, the number of the third fins 133a of the third mixer 133 is five which is small and a wide gap is secured between the third fins 133a. Therefore, even in a case where lumps of insufficiently melted resin is present in the thermoplastic resin which has passed through the flight 12, the lumps is deformed or broken by passing through the gap between the third fins 133a without clogging the gap.

Thereafter, the lumps of the insufficiently melted resin reaches the second mixer 132 provided on the downstream side in the axial direction of the third mixer 133. Here, the number of the second fins 132a of the second mixer 132 is ten and more than that of the third mixer 133. The gap between the second fins 132a is made narrower than the gap between the third fins 133a. Therefore, the lumps of the insufficiently melted resin is further deformed or finely broken by passing through the gap between the second fins 132a.

In addition, the lumps of the insufficiently melted resin reaches the first mixer 131 provided on the downstream side in the axial direction of the second mixer 132. Here, the number of the first fins 131a of the first mixer 131 is sixteen and even more than that of the second mixer 132. The gap between the first fins 131a is made even narrower than the gap between the second fins 132a. Therefore, the lumps of the insufficiently melted resin is further deformed or finely broken by passing through the gap between the first fins 131a. In this manner, while the lumps of the insufficiently melted resin passes the first mixer 131 via the second mixer 132 from the third mixer 133, the lumps of the insufficiently melted resin is finely broken, whereby dispersion of the reinforcement fibers in the thermoplastic resin is promoted.

Further, as described above, all the protrusion heights H1 to H3 of the first fins 131a to the third fins 133a of the first mixer 131 to the third mixer 133 are set lower than the protrusion height Hf of the flight 12. Therefore, even if a leading end portion in the radial direction of the flight 12 approaches is close to the inner wall surface 421 of the injection cylinder 42 to the extent of coming into contact therewith, a wide gap is secured between each of the leading end portions in the radial direction of the first fin 131a to the third fin 133a and the inner wall surface 421 of the injection cylinder 42. In this way, even if the thermoplastic resin enters the gap between the first fin 131a to the third fin 133a and the inner wall surface 421 of the injection cylinder 42, the reinforcement fibers can be prevented from being subjected to a large shear force, thereby being excessively broken.

Thereafter, the thermoplastic resin in a molten state which has passed through the mixer 13 reaches the check ring 16 shown in FIG. 3. At this time, the check ring 16 is pressed against the screw tip 15 by the thermoplastic resin in a molten state. In this way, a gap is formed between the shaft 11 and the check ring 16. The thermoplastic resin in a molten state passes through the gap between the shaft 11 and the check ring 16, the gap (not shown) between the check ring 16 shown in FIG. 4 and the small- diameter shaft 14, and the gap between the check ring 16 and the injection cylinder 42 shown in FIG. 1 and is then accumulated in a leading end portion of the injection cylinder 42.

On the other hand, in time with such an operation of the injection unit 4, the temperature of the movable mold 32 constituting the mold unit 3 is adjusted to a temperature lower than or equal to the thermal deformation temperature of the thermoplastic resin in advance under the control of the temperature control equipment.

Then, when hydraulic oil (not shown) is supplied from the hydraulic piping 47 to the hydraulic oil cylinder 411, the piston 46 moves to the mold unit 3 side in the inside of the hydraulic oil cylinder 411, and accordingly, the screw 10 advances in the axial direction in the inside of the injection cylinder 42. At this time, the check ring 16 which has been pressed against the screw tip 15 moves in the axial direction, that is, to the shaft 11 side and then comes into contact with the shaft 11, thereby blocking the gap between the shaft 11 and the check ring 16, and thus the thermoplastic resin in a molten state is prevented from flowing back to the shaft I 1 side through the gap.

In this way, the thermoplastic resin in a molten state accumulated in the leading end portion of the injection cylinder 42 is pressed and injected by the screw 10, thereby being filled into the cavity 2 of the mold unit 3. By setting the axial movement stroke of the check ring 16 to be greater than or equal to a desired weight- average fiber length of the reinforcement fibers, it is possible to make the weight- average fiber lengths of residual fibers in a molded product be greater than or equal to a desired length.

Then, after the thermoplastic resin is cooled and solidified, a molded product is taken out by separating the movable mold 32 from the fixed mold 31. At this time, an injection operation may be driven by an electromotive drive which is a combination of an electric motor and a ball screw, or the like, instead of being driven by hydraulic pressure.

In addition, when cooling and solidifying the thermoplastic resin, it is suitable to stop the heating of the mold and to start the cooling of the mold after or while the thermoplastic resin is filled into the mold heated to a temperature higher than or equal to the thermal deformation temperature of the thermoplastic resin in advance as described above. In such a procedure, since solidification is not started immediately when the injected thermoplastic resin has come into contact with the surface of the mold, the thermoplastic resin in a molten state covers the reinforcement fibers on the surface of a molded product, and thus exposure of the reinforcement fibers can be prevented more repeatedly and reliably.

Here, in the invention, since the thermoplastic resin containing the reinforcement fibers each having a length of greater than or equal to 2 mm and less than or equal to 20 mm is plasticized and kneaded to the extent that the weight-average fiber length becomes greater than or equal to I mm and less than or equal to 3 mm, dispersion of the reinforcement fibers is improved and disaggregation of a fiber bundle is also promated. Therefore, even if the temperature of the movable mold 32 is lower than the thermal deformation temperature of the thermoplastic resin, the temperature of the thermoplastic resin sufficiently rises and exposure of the reinforcement fibers on the surface of the molded resin product 100 can be prevented.

In addition, the shape or the size of each of the first fin 131a to the third fin 133a of the first mixer 131 to the third mixer 133 is not limited to that in this embodiment and a design change can be made appropriately. For example, the first fin 131a to the third fin 133a illustrated in this embodiment are provided in a direction parallel to the central axis of the mixer 13. However, the first fin 131a to the third fin 133a may also be provided to be inclined in the same direction as the flight 12 with respect to the central axis. That is, since a resin transportation force can be provided to the first fin 131a to the third fin 133a similarly to the flight 12 by inclining the first fin 131a to the third fin 133a in the same direction as the flight 12, flow resistance (equivalent to back pressure) of the thermoplastic resin which is discharged from the screw 10 can be reduced. In this way, since the resin discharge capability (plasticization capability) of the screw 10 as a whole is improved, and thus a time (plasticizatian time) during which the reinforcement fibers are kneaded and agitated in the screw 10 can be shortened, it is effective in suppressing breakage of the reinforcement fibers. Further, the numbers of first fins 131a to third fins 133a increases toward the leading end side in the axial direction from the rear end side in the axial direction and can be arbitrarily changed within a range satisfying the relationships described above.

(Examples)

Next, examples of the invention will be described. The applicant performed injection molding by using thermoplastic resin containing reinforcement fibers, with respect to a plurality of examples in which the conditions shown below were appropriately changed, and confirmed the quality of a molded product for each example.
(1) Injection molding machine used: 1050em-100 manufactured by Mitsubishi Heavy Industries Plastic Technology Co., Ltd., screw diameter: 90 mm
(2) Type of the screw:

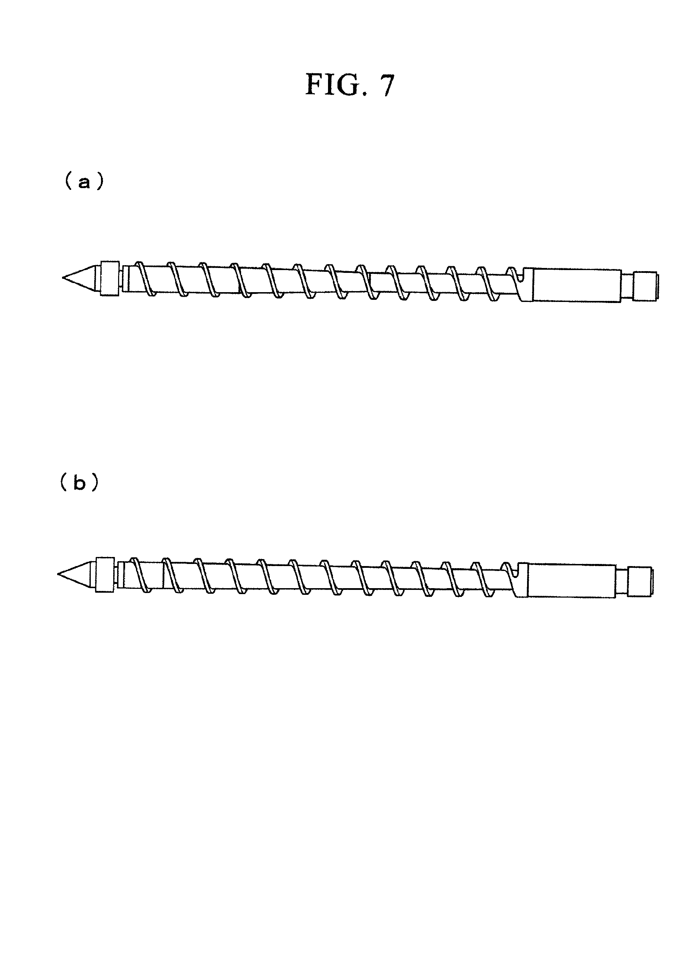

(a) Type 1: A single flight screw with a leading end portion mixer [refer to FIGS. 3 to 6]
(b) Type 2: A simple single flight screw [refer to FIG. 7(a)] (compared to Type 3, an outer diameter rapidly increases along the axial direction)
(c) Type 3: A slow compression type screw for long fiber-containing resin molding [refer to FIG. 7(b)] (compared to Type 2, an outer diameter gently increases along the axial direction)

(3) Thermoplastic resin feedstock used: polypropylene (PP)
(4) Reinforcement fibers: a glass fiber or a carbon fiber
(5) The reinforcement fiber content ratio: 20% by weight or 30% by weight
(6) The fiber length of the reinforcement fibers which were contained in the thermoplastic resin feedstock: 10 mm, 20 mm, or 25 mm
(7) The shape of a molded product: outer shape 1000 mm×300 mm× 15 mm
(8) Molding temperature: 230°C
(9) Preheating temperature of the thermoplastic resin feedstock: 80°C
(10) Back pressure at the time of plasticization: 0.5 MPa, 5 MPa, and 20 MPa
(11) The weight-average fiber length of the reinforcement fibers: An evaluation target area having a square shape of 80 mm square is cut away from a random area of a molded product. Then, the evaluation target area is heated for a given period of time at a temperature higher than or equal to the decomposition temperature of the thermoplastic resin, whereby a resin content is incinerated and removed, thereby making only the reinforcement fibers remain. Thereafter, the evaluation target area having only the reinforcement fibers is dispersed in an appropriate liquid medium and the lengths of 700 to 1000 reinforcement fibers are measured by using image processing or the like. Then, a weight-average fiber length is calculated from the measured lengths of individual reinforcement fibers by using the following expression. Here, in the expression, Li means the measured fiber length of the reinforcement fibers and Qi means the number of reinforcement fibers having a fiber length of Li.

$$[\text{Weight-average fiber length}] = (\Sigma Qi \times Li^2)/(\Sigma Qi \times Li)$$

(12) The degree of dispersion of the reinforcement fibers: If the degree of dispersion of fibers is poor, since a bundle of fibers is exposed on the surface of a molded product, evaluation of the degree of dispersion of fibers was evaluated as A, B, and C according to the external appearance states of the molded product.
A: There is no exposure of a bundle of fibers on the surface of the molded product and the glossiness of the surface of the molded product is high.
B: Although there is no exposure of a bundle of fibers on the surface of the molded product, the glossiness of the surface of the molded product is low.
C: A bundle of fibers is exposed on at least a portion of the surface of the molded product.

Here, the following Tables 1 and 2 show the test results regarding each example and each comparative example.
[Table 1]

| | | Example 1 | Example 2 | Example 3 | Example 4 | Example 5 | Example 6 |
|---|---|---|---|---|---|---|---|
| Reinforcement fiber | Type | Glass | Glass | Carbon | Glass | Glass | Glass |
| | Reinforcement fiber content ratio (% by weight) | 20 | 30 | 20 | 20 | 20 | 20 |
| | Fiber length (mm) | 10 | 10 | 10 | 10 | 20 | 25 |
| Feedstock preheating | | absent | absent | absent | present | absent | absent |
| Type of screw | | Type 1 | Type 1 | Type 1 | Type 1 | Type 1 | Type 1 |
| Back pressure at the time of plasticization (MPa) | | 5 | 5 | 5 | 5 | 5 | 5 |
| Rotational speed of screw (rpm) | | 80 | 80 | 80 | 80 | 80 | 80 |
| Weight-average fiber length of reinforcement fiber (mm) | | 2.1 | 2.0 | 2.0 | 2.4 | 2.8 | 2.8 |
| Degree of dispersion of reinforcement fibers | | A | A | A | A | A | A |
| Exposure of reinforcement fiber on the surface of molded resin product | | absent | absent | absent | absent | absent | absent |
| Painting defects | | absent | absent | absent | absent | absent | absent |

[Table 2]

| | | Comparative Example 1 | Comparative Example 2 | Comparative Example 3 | Comparative Example 4 | Comparative Example 5 |
|---|---|---|---|---|---|---|
| Reinforcement fiber | Type | Glass | Glass | Glass | Glass | Glass |
| | Reinforcement fiber content ratio (% by weight) | 20 | 20 | 20 | 20 | 20 |
| | Fiber length (mm) | 10 | 10 | 10 | 10 | 10 |
| Feedstock preheating | | absent | absent | present | present | absent |
| Type of screw | | Type 2 | Type 2 | Type 2 | Type 3 | Type 1 |
| Back pressure at the time of plasticization (MPa) | | 0.5 | 5 | 0.5 | 0.5 | 20 |
| Rotational speed of screw (rpm) | | 80 | 10 | 80 | 80 | 80 |
| Weight-average fiber length of reinforcement fiber (mm) | | 3.8 | 3.3 | 3.4 | 4.5 | 0.5 |
| Degree of dispersion of reinforcement fibers | | C | C | B | C | A |
| Exposure of reinforcement fiber on the surface of molded resin product | | present | present | absent | present | absent |

(continued)

|  |  | Comparativ e Example 1 | Comparative Example 2 | Comparative Example 3 | Comparativ e Example 4 | Comparative Example 5 |
|---|---|---|---|---|---|---|
| Painting defects |  | present | present | absent | present | absent |

In Examples I to 6, by carrying out the invention, the weight-average fiber length of the reinforcement fibers was in a range of 2.0 mm to 2.8 mm and satisfied a range of greater than or equal to 1 mm and less than or equal to 3 mm, which is a range of the weight-average fiber length related to the invention, and the molded resin product could obtain sufficient strength. Further, in this case, with respect to any example, the degree of dispersion of the reinforcement fibers was good, there was also no exposure of the reinforcement fibers on the surface of the molded resin product, and painting defects were also not generated.

In Comparative Example 1, a simple single flight screw having no mixer was used by changing the type of a screw, and also the degree of kneading was reduced by reducing back pressure at the time of plasticization. In this case, the weight-average fiber length of the reinforcement fibers was 3.8 mm and exceeded a range of greater than or equal to 1 mm and less than or equal to 3 mm, which is a range of the weight-average fiber length related to the invention. Therefore, in the molded resin product, the degree of dispersion of the reinforcement fibers was low, the reinforcement fibers were exposed on the surface, and painting defects were also generated.

In Comparative Example 2, a simple single flight screw having no mixer was used by changing the type of a screw, and also the degree of kneading at the time of plasticization was reduced by reducing the rotational speed of the screw. Also in this case, the weight-average fiber length of the reinforcement fibers was 3.3 mm and exceeded a range of greater than or equal to 1 mm and less than or equal to 3 mm, which is a range of the weight-average fiber length related to the invention. Therefore, in this case, in the molded resin product, the degree of dispersion of the reinforcement fibers was low, the reinforcement fibers were exposed on the surface, and painting defects were also generated.

In Comparative Example 3, a simple single flight screw having no mixer was used by changing the type of a screw, and also the degree of kneading at the time of plasticization was reduced by promoting softening thereof by performing preheating of the thermoplastic resin feedstock. In this case, the weight-average fiber length of the reinforcement fibers was 3.4 mm and exceeded a range of greater than or equal to 1 mm and less than or equal to 3 mm, which is a range of the weight-average fiber length related to the invention. However, in this case, in the molded resin product, although the degree of dispersion of the reinforcement fibers was low, the reinforcement fibers were not exposed on the surface and painting defects were also not generated.

In Comparative Example 4, a slow compression type screw for long fiber-containing resin molding was used by changing the type of a screw, and also the degree of kneading at the time of plasticization was reduced by promoting softening thereof by performing preheating of the thermoplastic resin feedstock. In this case, the weight-average fiber length of the reinforcement fibers was 4.5 mm which exceeded a range of greater than or equal to 1 mm and less than or equal to 3 mm, which is a range of the weight-average fiber length related to the invention, and is the longest in the comparative examples. Therefore, in this case, in the molded resin product, the degree of dispersion of the reinforcement fibers was low, the reinforcement fibers were exposed on the surface, and painting defects were also generated.

Here, if the results of Comparative Examples 1 to 4 are compared with each other, it is found that where the weight- average fiber length of the reinforcement fibers is long, variation occurs in the presence or absence of exposure of the reinforcement fibers on the surface of the molded resin product, and thus it is difficult to stably obtain a molded resin product having excellent aesthetics.

In Comparative Example 5, the degree of kneading at the time of plasticization was increased by increasing back pressure at the time of plasticization without changing the type of a screw. In this case, in the molded resin product, the degree of dispersion of the reinforcement fibers was high, the reinforcement fibers were not exposed on the surface, and painting defects were also not generated. However, in this case, since the weight-average fiber length of the reinforcement fibers was 0.5 mm and fell below 1.0 mm in which the long fiber-specific effect of improving mechanical strength can be obtained, the molded resin product could not obtain sufficient strength.

Industrial Applicability

The molded resin product for a vehicle structural member or an aircraft structural member according to the invention is formed by injection-molding of thermoplastic resin feedstock containing reinforcement fibers with a screw provided at a leading end portion thereof with a mixer protruding in a radial direction,
Then, in the molded resin product, the reinforcement fiber content ratio is greater than or equal to 20% by weight and the weight-average fiber length of the reinforcement fibers in an evaluation target area having a certain size is greater than or equal to 1 mm and less than or equal to 3 mm.

In such a configuration, it is possible to obtain a molded resin product having necessary and sufficient strength for use as a vehicle structural member or an aircraft structural member in place of a metallic member and having a thin thickness and being lightweight. Further, since the weight-average fiber length is greater than or equal to 1 mm and less than or equal to 3 mm, the width of the molding conditions can be widened and aggregation or defective dispersion of the reinforcement fibers can also be prevented.

Reference Signs List

| 1: | injection molding machine |
|---|---|
| 2: | cavity |
| 3: | mold unit |
| 4: | injection unit |
| 10: | plasticizing screw for injection molding |
| 11: | shaft |
| 12: | flight |
| 13: | mixer |
| 14: | small-diameter shaft |
| 15: | screw tip |
| 16: | check ring |
| 31: | fixed mold |
| 32: | movable mold |
| 41: | unit main body |
| 42: | injection cylinder |
| 43: | hopper |
| 44: | connecting shaft |
| 45: | motor |
| 46: | piston |
| 47: | hydraulic piping |
| 100: | molded resin product |
| 101: | evaluation target area |
| 131: | first mixer |
| 132: | second mixer |
| 133: | third mixer |
| 411: | hydraulic oil cylinder |
| 131a: | first fin |
| 132a: | second fin |
| 133a: | third fin |
| Dh: | thickness |
| Dj: | thickness |
| H1: | protrusion height (first fin) |
| H2: | protrusion height (second fin) |
| H3: | protrusion height (third fin) |
| Hf: | protrusion height (flight) |
| L: | length of one side |

**Claims**

1. A molded resin product for a vehicle structural member or an aircraft structural member, which is formed by injection-molding of thermoplastic resin feedstock containing reinforcement fibers by using a screw provided at a leading end portion thereof with a mixer protruding in a radial direction,

   wherein the reinforcement fiber content ratio is greater than or equal to 20% by weight, and the weight-average fiber length of the reinforcement fibers in an evaluation target area having a certain size is greater than or equal to 1 mm and less than or equal to 3 mm.

2. The molded resin product for a vehicle structural member or an aircraft structural member according to Claim 1, wherein the length of the reinforcement fibers is greater than or equal to 2 mm and less than or equal to 20 mm.

3. The molded resin product for a vehicle structural member or an aircraft structural member according to Claim 1 or 2, wherein the evaluation target area is an approximate square in a plan view and the length of one side thereof is greater than or equal to 20 mm.

4. The molded resin product for a vehicle structural member or an aircraft structural member according to any one of Claims 1 to 3, wherein the thermoplastic resin injected from the screw is filled into a mold having a temperature adjusted to a temperature lower than or equal to the thermal deformation temperature of the thermoplastic resin in advance, and is then cooled and solidified.

5. The molded resin product for a vehicle structural member or an aircraft structural member according to any one of Claims 1 to 3, wherein the thermoplastic resin is cooled and solidified by stopping heating of a mold and starting cooling of the mold after or while the mold is heated to a temperature higher than or equal to the thermal deformation temperature of the thermoplastic resin in advance is filled with the thermoplastic resin injected from the screw.

6. The molded resin product for a vehicle structural member or an aircraft structural member according to any one of Claims 1 to 5, wherein matrix resin of the thermoplastic resin is polyolefin-based resin or polyamide-based resin.

7. The molded resin product for a vehicle structural member or an aircraft structural member according to any one of Claims 1 to 6, wherein the reinforcement fibers includes at least one of a glass fiber, a carbon fiber, a metal fiber, and a natural fiber.

**Amended claims under Art. 19.1 PCT**

1. (Amended) A molded resin product for a vehicle structural member or an aircraft structural member, which is formed by injection-molding of thermoplastic resin feedstock containing reinforcement fibers by using a screw provided at a leading end portion thereof with a mixer which is provided with radially protruding fins and in which the number of fins increases toward a leading end side in the axial direction from a rear end side in the axial direction, wherein thermoplastic resin in which reinforcement fibers each having a length of greater than or equal to 2 mm and less than or equal to 20 mm are contained at the reinforcement fiber content ratio of greater than or equal to 20% by weight is used as feedstock, and the weight-average fiber length of the reinforcement fibers therein is greater than or equal to 1 mm and less than or equal to 3 mm.

2. (Deleted)

3. (Amended) The molded resin product for a vehicle structural member or an aircraft structural member according to Claim 1, wherein the evaluation target area is an approximate square in a plan view and the length of one side thereof is greater than or equal to 20 mm.

4. (Amended) The molded resin product for a vehicle structural member or an aircraft structural member according to Claim 1 or 3, wherein the thermoplastic resin injected from the screw is filled into a mold having a temperature adjusted to a temperature lower than or equal to the thermal deformation temperature of the thermoplastic resin in advance, and then cooled and solidified.

5. (Amended) The molded resin product for a vehicle structural member or an aircraft structural member according to Claim 1 or 3, wherein the thermoplastic resin is cooled and solidified by starting cooling of a mold after the mold is heated to a temperature higher than or equal to the thermal deformation temperature of the thermoplastic resin in advance and filled with the thermoplastic resin injected from the screw or after heating of the mold is stopped during filling.

6. (Amended) The molded resin product for a vehicle structural member or an aircraft structural member according to any one of Claims 1, 3, 4, and 5, wherein matrix resin of the thermoplastic resin is polyolefin-based resin or polyamide-based resin.

7. (Amended) The molded resin product for a vehicle structural member or an aircraft structural member according to any one of Claims 1, 3, 4, 5, and 6, wherein the reinforcement fibers include at least one type of a glass fiber, a carbon fiber, a metal fiber, and a natural fiber.

# FIG. 1

# FIG. 2

# FIG. 3

# FIG. 4

# FIG. 5

LEADING END SIDE
IN THE AXIAL
DIRECTION ←————→ REAR END SIDE
IN THE AXIAL
DIRECTION

# FIG. 6

(a)

(b)

(c)

# FIG. 7

(a)

(b)

## INTERNATIONAL SEARCH REPORT

| | International application No. |
|---|---|
| | PCT/JP2010/069810 |

### A. CLASSIFICATION OF SUBJECT MATTER
*B29C45/48*(2006.01)i, *B29C45/00*(2006.01)i, *B64C1/00*(2006.01)i

According to International Patent Classification (IPC) or to both national classification and IPC

### B. FIELDS SEARCHED

Minimum documentation searched (classification system followed by classification symbols)
B29C45/48, B29C45/00, B64C1/00

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2010 |
| Kokai Jitsuyo Shinan Koho | 1971-2010 | Toroku Jitsuyo Shinan Koho | 1994-2010 |

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| Y | JP 2010-132914 A (Asahi Kasei Chemicals Corp.), 17 June 2010 (17.06.2010), paragraphs [0002], [0058] & US 2009/0176923 A1 & EP 1990369 A1 & WO 2007/097184 A1 | 1-7 |
| Y | JP 2000-218677 A (Mitsubishi Heavy Industries, Ltd.), 08 August 2000 (08.08.2000), paragraph [0017]; fig. 2 (Family: none) | 1-7 |
| Y | JP 11-138601 A (Kawasaki Steel Corp.), 25 May 1999 (25.05.1999), paragraph [0029] (Family: none) | 3 |

[X] Further documents are listed in the continuation of Box C.    [ ] See patent family annex.

| | |
|---|---|
| *   Special categories of cited documents:<br>"A"   document defining the general state of the art which is not considered to be of particular relevance<br>"E"   earlier application or patent but published on or after the international filing date<br>"L"   document which may throw doubts on priority claim(s) or which is cited to establish the publication date of another citation or other special reason (as specified)<br>"O"   document referring to an oral disclosure, use, exhibition or other means<br>"P"   document published prior to the international filing date but later than the priority date claimed | "T"   later document published after the international filing date or priority date and not in conflict with the application but cited to understand the principle or theory underlying the invention<br>"X"   document of particular relevance; the claimed invention cannot be considered novel or cannot be considered to involve an inventive step when the document is taken alone<br>"Y"   document of particular relevance; the claimed invention cannot be considered to involve an inventive step when the document is combined with one or more other such documents, such combination being obvious to a person skilled in the art<br>"&"   document member of the same patent family |

| Date of the actual completion of the international search | Date of mailing of the international search report |
|---|---|
| 14 December, 2010 (14.12.10) | 28 December, 2010 (28.12.10) |

| Name and mailing address of the ISA/<br>   Japanese Patent Office | Authorized officer |
|---|---|
| Facsimile No. | Telephone No. |

Form PCT/ISA/210 (second sheet) (July 2009)

# EP 2 639 037 A1

| | INTERNATIONAL SEARCH REPORT | International application No. |
|---|---|---|
| | | PCT/JP2010/069810 |

| C (Continuation). DOCUMENTS CONSIDERED TO BE RELEVANT | | |
|---|---|---|
| Category* | Citation of document, with indication, where appropriate, of the relevant passages | Relevant to claim No. |
| Y | JP 09-314629 A (GE Plastics Japan Ltd.), 09 December 1997 (09.12.1997), claims (Family: none) | 4 |
| Y | JP 2006-82267 A (Ono Sangyo Co., Ltd.), 30 March 2006 (30.03.2006), paragraphs [0009], [0010] (Family: none) | 5 |

Form PCT/ISA/210 (continuation of second sheet) (July 2009)

21

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H780834 B
- JP 2000037723 A
- JP 4439361 B
- JP 2005324733 A
- JP 3638292 B